# EUROPÄISCHE PATENTSCHRIFT

(11) **EP 0 419 855 B1**
(45) Veröffentlichungstag und Bekanntmachung des Hinweises auf die Patenterteilung: **27.12.1995**
(21) Anmeldenummer: 90116224.8
(22) Anmeldetag: 24.08.1990
(51) Int. Cl.: E04B 9/20

(54) **Verstellbare Aufhängelasche**
Adjustable suspension bracket
Bride de suspension réglable

(30) Priorität: 25.09.1989 AT 2225/89
(43) Veröffentlichungstag der Anmeldung: 03.04.1991
(73) Patentinhaber: Zumtobel Aktiengesellschaft, A-6850 Dornbirn (AT)
(72) Erfinder: Spiegel, Michael, A-6850 Dornbirn (AT)
(74) Vertreter: Hefel, Herbert, Dipl.-Ing.

(56) Entgegenhaltungen:
- DE-B- 1 255 893
- DE-B- 2 918 022
- US-A- 3 076 536
- US-A- 3 233 297

## Beschreibung

Die Erfindung bezieht sich auf eine verstellbare Aufhängelasche aus federelastischem Material für Pendelrohre mit den Merkmalen des Oberbegriffes des Patentanspruches 1.

Solche Laschen sind beispielsweise aus der österreichischen Patentschrift 377 560 bekannt: Ein im wesentlichen U-förmiger Bügel aus Federstahl besitzt schrägstehende Schenkel, die über eine Wange einstückig miteinander verbunden sind. In den Schenkeln sind in fluchtender Anordnung zwei Ausstanzungen vorgesehen, durch welche das Pendelrohr steckbar ist. An der Wange, die die beiden federnden Schenkel verbindet, ist ein Halter angeschweißt, der an seinem unteren Ende Mittel aufweist, an welchen die aufzuhängende Konstruktion befestigt wird. Dabei kann es sich hier um einer Tragrost für Metallrasterdecken oder aber für Leuchten handeln, oder aber es konnen Leuchten direkt daran befestigt sein. An seinem oberen Ende ist das Pendelrohr ebenfalls mit einer Aufhängevorrichtung ausgestattet. Durch das Zusammendrücken der Schenkel der Lasche wird das Pendelrohr frei, und die Lasche kann entlang des Pendelrohres verschoben werden, um die Aufhängevorrichtung als Ganzes zu nivellieren. Solche Einrichtungen haben sich durchaus bewährt, doch ist der für die Herstellung der verstellbaren Aufhängelaschen erforderliche Aufwand für einen Massenartikel relativ hoch, müssen doch vorerst zwei getrennte Teile gefertigt und dann durch Schweißen miteinander verbunden werden. Darüberhinaus ist bei dieser bekannten Konstruktion der angeschweißte Halter bezüglich der Längsachse des Pendelrohres seitlich versetzt, so daß während der Montage diese Pendelrohre oft schräg hängen, was die Montage der Tragkonstruktion oder der Leuchten erschwert. Aus der DE-OS 27 00 002 und auch aus der DE-OS 23 57 638 ist es bekannt, solche Laschen einstückig aus Federstahl auszustanzen und durch Biegen zu formen.

Von diesem Stand der Technik geht die Erfindung aus, und sie zielt darauf ab, die Herstellung einer solchen Aufhängelasche zu vereinfachen und sie zweckmäßigerweise so auszubilden, daß sie am Pendelrohr dazu dienen kann, dieses abzuhängen oder am Pendelrohr einen Konstrucktionsteil aufzuhängen, wobei vor allem auch darauf Bedacht genommen wird, daß die der Aufhängung dienenden Mittel im wesentlichen mit der Achse des Pendelrohres in einer Ebene liegen, um das Schräghängen des Pendelrohres zu vermeiden. Zur Lösung dieser Aufgabe schlägt die Erfindung Maßnahmen vor, daß bei in der Ebene liegendem Stanzzuschnitt die zweite, der Aufnahme des Pendelrohres dienende Öffnung an der der ersten Öffnung zugewandten Seite in eine quer zum Stanzzuschnitt verlaufende, annähernd rechteckartige Aussparung übergeht, wobei in der gedachten Verlängerung der Schmalseiten dieser rechteckartigen Aussparung und im wesentlichen parallel zur Längsachse des Stanzzuschnittes schlitzartige Ausstanzungen verlaufen, welche mit den Längskanten des Stanzzuschnittes Lappen begrenzen, die entweder frei auskragen oder zur Bildung einer Öse miteinander über einen Mittelteil verbunden sind und die quer zur Längsachse des Stanzzuschnittes vorgesehenen Biegelinien annähernd in den beiden Längsseiten der rechteckartigen Aussparung verlaufen und die Biegelinie für die Lappen den Mittelbereich der einen, der Aufnahme des Pendelrohres dienenden Öffnung quert.

Zur Veranschaulichung wird die Erfindung anhand der Zeichnung näher erläutert. Es zeigen:
- Fig. 1: einen ersten Stanzzuschnitt;
- Fig. 2: einen zweiten Stanzzuschnitt;
- Fig. 3: die aus dem Stanzzuschnitt nach Fig. 1 gebogene Lasche in Ansicht und Fig. 4 in Seitensicht;
- Fig. 5: die aus dem Stanzzuschnitt nach Fig. 2 gebogene Lasche in Ansicht und Fig. 6 in Seitensicht;
- die Fig. 7 und 8: ein Pendelrohr mit den Laschen nach den Fig. 3 und 5 in Ansicht und in Seitensicht.

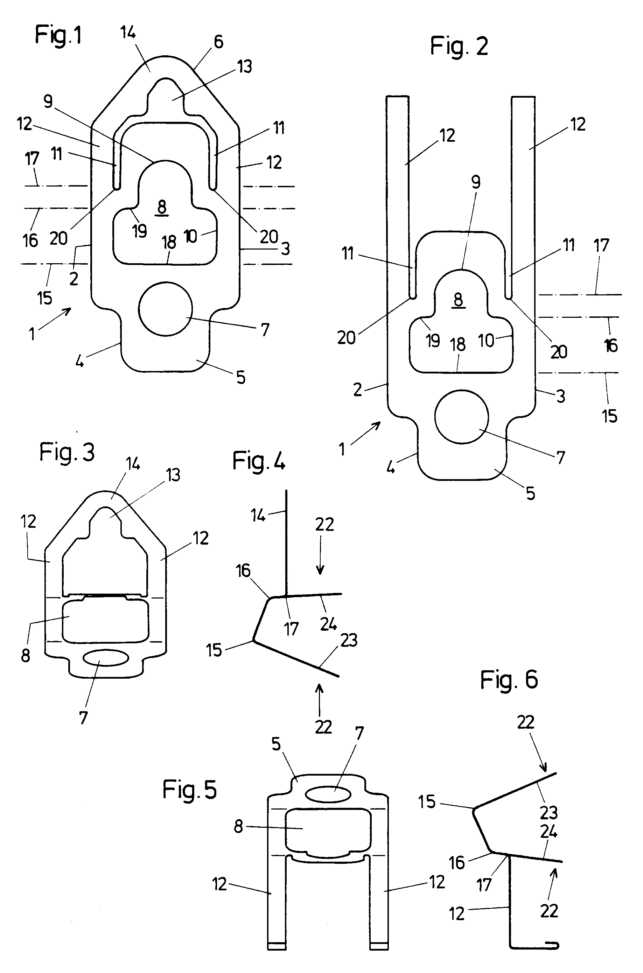

De Stanzzuschnitt für die erste Aufhängelasche ist in Draufsicht in Fig. 1 dargestellt. Ein längliches Federstahlblech 1 besitzt zwei im wesentlichen parallel zueinander verlaufende Längskanten 2 und 3. Die eine Schmalseite 4 ist durch einen eingeschnürten Fortsatz 5 begrenzt, die andere Schmalseite 6 ist keilförming gestaltet. Im unteren Bereich dieses Federstahlbleches 1, dort wo der eingeschnürte Fortsatz 5 ansetzt, ist eine kreisförmige Öffnung 7, oberhalb der eine weitere Öffnung 8 liegt, deren der ersten Öffnung 7 abgewandte Bereich 9 hier korrespondierend zur Umfangskontur der Öffnung 7 verläuft, wogegen der untere, der Öffnung 7 zugewandte Bereich in eine quer zum Stanzzuschnitt verlaufende, in etwa rechteckförmige Aussparung 10 übergeht und erweitert ist.
In der gedachten Verlängerung der Schmalseiten dieser rechteckartigen Aussparung 10 und im wesentlichen parallel zur Längsachse des Stanzzuschnittes verlaufen schlitzartige Ausstanzungen 11, welche zusammen mit den Längskanten 2 und 3 des Stanzzuschnittes Lappen 12 begrenzen.

Die inneren Ansätze 20 dieser schlitzartigen Ausstanzungen 11 liegen etwa in einer Linie mit dem Mittelbereich des oberen Teiles der Öffnung 8.

Bei dem hier gezeigten Ausführungsbeispiel setzen sich die schlitzartigen Ausstanzungen 11 nach oben fort und sind mit einer weiteren Ausstanzung 13 zu einem im wesentlichen U-förmigen Stanzschnitt verbunden, so daß die beiden Lappen 11 über einen Mittelteil 14 eine geschlossene Einheit bilden.

Um aus diesem ebenen Stanzzuschnitt nach Fig. 1 die gewünschte Aufhängelasche zu erhalten, werden nun drei Biegeoperationen ausgeführt, und zwar um die Biegelinien 15, 16 und 17. Die Biegelinien 15 und 16 verlaufen dabei praktisch in den Längsseiten 18 und 19 der rechteckartigen Aussparung 10. Die dritte Biegelinie 17 hingegen verläuft durch den Mittelbereich des oberen Teiles der Öffnung 8 und durch die inneren Ansätze 20 der schlitzartigen Ausstanzungen 11. Der durch diese Biegeoperationen erhaltene Bauteil ist in den Fig. 3 und 4 in Ansicht und in Seitensicht dargestellt. Aus Fig. 4 sind die Biegewinkel erkennbar.

Der Stanzzuschnitt für die zweite Aufhängelasche ist in Fig. 2 veranschaulicht, und er entspricht im wesentlichen jenem nach Fig. 1, wobei hier zur Bezeichnung gleicher Teile gleiche Hinweisziffern verwendet worden sind. Der Unterschied gegenüber dem Gegenstand nach Fig. 1 liegt darin, daß hier die Lappen 12 frei auskragen und nicht über einen Mittelteil 14 zur Bildung einer Öse miteinander einstückig verbunden sind. Die Lage der Biegelinien 15, 16 und 17 entspricht jener nach Fig. 1; die durch die Biegeoperation gefertigte und gewonnene Lasche zeigen in Ansicht und in Seitensicht die Fig. 5 und 6.

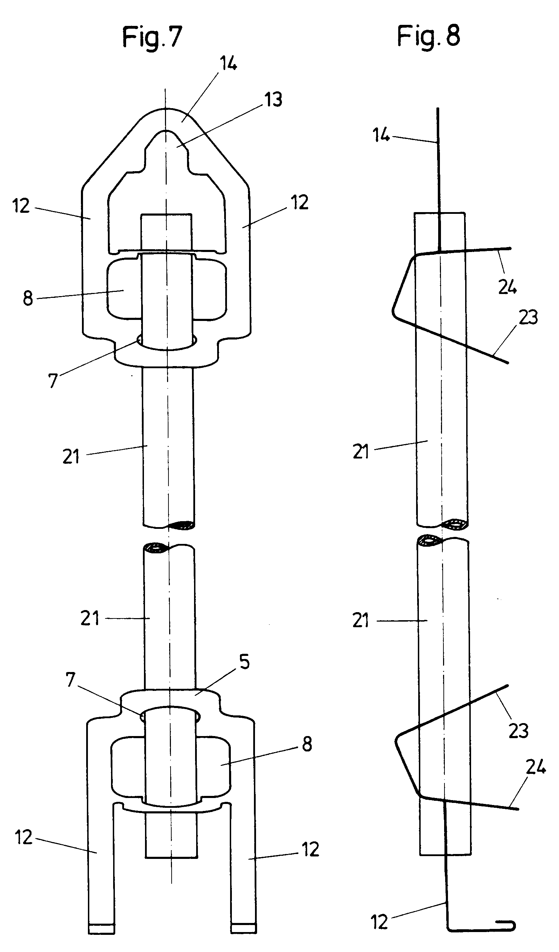

Die Anwendung der so hergestellten Aufhängelaschen in Verbindung mit einem sogenannten Pendelrohr 21 veranschaulichen die Fig.7 und 8 in zwei Ansichten. Das Pendelrohr 21 wird mit diesen Laschen dadurch verbunden, daß mit Daumen und Zeigefinger in Richtung der Pfeile 22 (Fig. 4 und Fig. 6) ein leichter Druck ausgeübt wird, wodurch die beiden Schenkel 23 und 24 einander genähert werden und nun das Pendelrohr mit seinem oberen bzw. unteren Ende in die Öffnungen 7 und 8 der Lasche einschiebbar ist. Werden die Schenkel 23 und 24 vom äußeren Druck (Pfeil 22) entlastet, so klemmt sich die Lasche von selbst am Pendelrohr 21 fest, entlang dem sie dadurch verschoben werden kann, daß auf die Schenkel 23 und 24 in Richtung der erwähnten Pfeile 22 ein Druck ausgeübt wird, wodurch sich die klemmende Verbindung löst. Mit dem Mittelteil 14, der hier ja eine umfangsgeschlossene Öse formt, wird dieser Bauteil an einem an einer Decke mauerseitg angeordneten Haken aufgehängt, die umgebogenen Lappen 12 (Fig. 6) nehmen den aufzuhängengenden Konstuktionsteil auf.

Es ist insbesondere aus Fig. 8 erkennbar, daß sowohl der der Aufhängung dienende Mittelteil 14 der oberen Lasche wie auch die abgewinkelten Lappen 12 der unteren Lasche für die Aufnahme des aufzuhängenden Konstruktionsteiles in der Mittelachse des Pendelrohres 21 liegen, so daß dieses Pendelrohr von der hier nicht dargestellten Decke gerade, d.h. vertikal nach unten hängt. Ferner sind die Aufhängelaschen einstückig aus einem Blechstück gefertigt. Durch die Lage der Biegelinien, insbesondere der Biegelinien 15 und 16, ist für die Biegeoperation selbst nur ein geringer Energieaufwand notwendig, da diese Biegelinien in einem querschnittsgeschwächten Teil des Stanzzuschnittes verlaufen. Dadurch ist auch die für die Verbiegung der Schenkel (Pfeil 22) notwendige Kraft bei der Montage relative gering, was außerordentlich wichtig ist, wenn bedacht wird, daß der Handwerker bei der Verlegung einer größeren Decke oder einer größeren Beleuchtungseinrichtung mehrere hunderte solcher Laschen zu montieren hat. Dennoch sind die Laschen ausreichend steif, um entsprechende Lasten sicher und dauerhaft übertragen zu können.

Verläuft der Bereich 9 der oberen Öffnung 8 korrespondierend zur Querschnittskontur des Pendelrohres 21, so sei hier abschließend vermerkt, daß dieser konturgleiche Lauf nicht unbedingt notwendig ist. Dieser Bereich könnte auch von gerade verlaufenden Linienabschnitten begrenzt sein, was auch für die Öffnung 7 gilt, da erfahrungsgemäß auch eine punktförmige Berührung mit dem Pendelrohr 21 eine nicht unbedeutende Haltekraft erzeugen läßt.

### Legende zu den Hinweisziffern

- 1: Federstahlblech
- 2: Längskante
- 3: Längskante
- 4: Schmalseite
- 5: Fortsatz
- 6: Schmalseite
- 7: Öffnung
- 8: Öffnung
- 9: Bereich
- 10: Aussparung
- 11: Schlitzartige Ausstanzung
- 12: Lappen
- 13: Ausstanzung
- 14: Mittelteil
- 15: Biegelinie
- 16: Biegelinie
- 17: Biegelinie
- 18: Längsseite
- 19: Längsseite
- 20: Ansatz
- 21: Pendelrohr
- 22: Pfeil
- 23: Schenkel
- 24: Schenkel

## Patentansprüche

1. Verstellbare Aufhängelasche aus federelastischem Material für Pendelrohre mit zwei winkelig zueinander stehenden Schenkeln, in welchen Öffnungen zur Aufnahme des Pendelrohres ausgespart sind, und mit einem Hänger, mit welchem das Pendelrohr abhängbar bzw. am Pendelrohr ein Konstruktionsteil aufhängbar ist, wobei mindestens eine der Öffnungen in den Schenkeln eine zur Querschnittskontur des Pendelrohres korrespondierende Umfangskontur aufweist und wobei ferner die Aufhängelasche samt Hänger einstückig aus Federstahlblech ausgestanzt und gebogen ist, dadurch gekennzeichnet, daß bei in einer Ebene liegendem Stanzzuschnitt der Lasche eine der der Aufnahme des Pendelrohres (21) dienenden Öffnungen (8) an der der anderen Öffnung (7) zugewandten Seite in eine quer zum Stanzzuschnitt verlaufende, annähernd rechteckartige Aussparung (10) übergeht, wobei in der gedachten Verlängerung der Schmalseiten dieser rechteckartigen Aussparung (10) und im wesentlichen parallel zur Längsachse des Stanzzuschnittes schlitzartige Ausstanzungen (11) verlaufen, welche mit den Längskanten (2, 3) des Stanzzuschnittes Lappen (12) begrenzen, die entweder frei auskragen oder zur Bildung einer Öse miteinander über einen Mittelteil (14) verbunden sind und daß die quer zur Längsachse des Stanzzuschnittes vorgesehenen Biegelinien (15, 16) annähernd in den beider Längsseiten (18, 19) der rechteckartigen Aussparung (10) verlaufen und die Biegelinie (17) für die Lappen (12) den Mittelbereich der durch die rechteckige Aussparung (10) erweiterten Öffnung quert.

2. Verstellbare Aufhängelasche nach Anspruch 1, dadurch gekennzeichnet, daß die frei auskragenden Lappen (12) außer der Umbiegung gegenüber dem Stanzzuschnitt noch weitere Umbiegungen um zueinander parallele Achsen an ihren freien Enden aufweisen.

## Claims

1. An adjustable suspension bracket made from resilient material, for pendant tubes, the said bracket having two limbs which are positioned at an angle to one another and have apertures provided for receiving the pendant tube, and having a suspension member via which the pendant tube can be hung and/or a constructional part can be hung on the pendant tube, at least one of the apertures in the limbs having an outline corresponding to the cross-sectional outline of the pendant tube, the suspension bracket and suspension member being punched out as a single part from spring sheet steel and being curved, **characterised in that** when a punched blank of the bracket is located in one plane, one of the apertures (8) to receive the pendant tube (21) merges into a substantially rectangular opening (10) extending transversely to the punched blank on the side facing the other aperture (7), and slot-like punched-out portions (11) extend substantially parallel to the longitudinal axis of the punched blank in the notional extended portion of the short sides of the said rectangular opening (10), the longitudinal edges (2, 3) of the punched blank and the said punched-out portions (11) defining tabs (12) which either project freely or are interconnected via an intermediate portion (14) so as to form an eye, and the bending lines (15, 16) provided transversely to the longitudinal axis of the punched blank extend substantially into the two long sides (18, 19) of the rectangular recess (10), and the bending line (17) for the tabs (12) crosses the central region of the aperture widened by the rectangular opening (10).

2. An adjustable suspension bracket according to claim 1, **characterised in that** in addition to bending relative to the punched blank, at their free ends the freely projecting tabs (12) are bent further about parallel axes.

## Revendications

1. Patte de suspension réglable en matériau élastique, destinée à recevoir des tubes pendulaires, comportant deux branches faisant un angle entre elles et percées d'ouvertures de passage du tube pendulaire, ainsi qu'une suspente permettant de suspendre le tube pendulaire lui-même ou de lui suspendre un élément de construction, au moins une des ouvertures dans les branches ayant un contact correspondant à la forme de la section du tube pendulaire, tandis que la patte de suspension y compris la suspente est réalisée en une seule pièce de tôle en acier à ressort, caractérisée en ce que la pièce découpée formant la patte se trouvant dans un plan, une des ouvertures (8) servant à recevoir le tube pendulaire (21) se prolonge le long du côté tourné sur l'autre ouverture (7) par un évidement (10) à peu près rectangulaire, disposé transversalement par rapport à la pièce découpée, tandis que dans le prolongement imaginaire des petits côtés de cet évidement rectangulaire (10) et sensiblement parallèlement à l'axe longitudinal de la pièce découpée, se trouvent des découpes à matrice en forme de fentes (11) qui délimitent les pattes (12) des bords longitudinaux (2, 3) débordant librement ou reliées entre elles par une partie centrale (14) de manière à forer un anneau, et en ce que les lignes de pliage (15, 16), transversales par rapport à l'axe longitudinal de la pièce découpée se trouvant sensiblement au niveau des deux côtés longitudinaux (18, 19) de l'évidement rectangulaire (10), tandis que la ligne de pliage (17) des languettes (12) traverse la partie centrale de l'ouverture prolongée par l'évidement (10).

2. Patte de suspension selon la revendication 1, caractérisée en ce que les languettes (12) dépassant librement présentent, en plus de leur pliage par rapport à la pièce découpée, d'autres pliages autour d'axes parallèles entre eux, à leurs extrémités libres.
